# EUROPEAN PATENT APPLICATION

(11) **EP 3 657 423 A1**
(43) Date of publication of application: **27.05.2020**
(21) Application number: 18210155.0
(22) Date of filing: 04.12.2018
(51) Int. Cl.: G06Q 30/02, G09F 21/04

(54) **ADVERTISING SYSTEM AND METHOD USING MOVABLE ADVERTISEMENT MEDIUM**

(30) Priority: 22.11.2018 KR 20180145745
(71) Applicant: Tababa Co., Ltd., Jeonju-si, Jeollabuk-do 55069 (KR)
(72) Inventor: JIN, Myoung Soo, 54824 Jeollabuk-do (KR)
(74) Representative: Isarpatent

(57) **Abstract**

The present disclosure provides an advertising system and method for facilitating checking whether the advertisement is performed effectively in an exposure area during an exposure time through a movable advertisement medium. The advertising method may be performed by an advertising agency device accessible by an advertiser device and a mobile terminal of a user who carries an advertisement medium. The advertising agency device receives an advertising option and advertising expense data from the advertiser device and provides advertising data according to the advertising option to the advertisement medium through the mobile terminal so that the advertisement medium outputs an advertising content corresponding to the advertising data. The advertising agency device determines an advertising validity which indicates whether the advertising content is output according to the advertising option; and paying an advertising fee to an account of the user when the advertising content is determined to be output according to the advertising option. GPS positioning information or photograph images may be used for the determination of the advertising validity.

## Description

### CROSS-REFERENCE TO RELATED APPLICATION

The present application claims priority to Korean Patent Application No. 10-2018-0145745, filed on November 22, 2018, in the Korean Intellectual Property Office, which is incorporated herein in its entirety by reference.

### TECHNICAL FIELD

The present disclosure relates to an advertising system and method and, more particularly, to an advertising system and method in which an ordinary person who is a user of a movable advertisement medium such as a backpack performs an advertisement through the movable advertisement medium and is rewarded by an advertising fee according to the advertisement.

### BACKGROUND

Generally, an outdoor advertising is carried out through a billboard fixedly installed at a bus stop, in a large shopping mall, in a movie theater, or on a roof or outer wall of a building, for example.

Such a fixed billboard has a substantial advertising effect only to a person who is in a line-of-sight from the billboard, but is not effective to a person out of sight from the billboard. In other words, the advertising effect of the fixed billboard is expected only to those located near the billboard.

In order to solve the problem, an advertisement using a movable billboard has been proposed. The movable billboard is a billboard carried by a person or installed on an automobile so as to expose an advertising content while the person or the automobile is moving.

For example, Korean unexamined patent publication No. 2014-0021176 discloses a backpack having an advertisement functionality. The backpack disclosed in this document includes a display on a harness or an outer surface of a backpack main body to output an advertising message or a graphic image.

### SUMMARY

In the advertisement using the backpack, the advertiser or the advertising agency may pay the an advertising fee to the user of the advertisement medium as a reward for the advertising.

However, a problem of fraudulent receipt of the advertising fee may occur if it is not properly checked whether the user is performing the advertising normally using the advertisement medium such as the backpack.

According to the present disclosure, one object of the present disclosure is to provide an advertising system and a method which can suppress the problem of the fraudulent receipt of an advertising fee while performing the advertising through a movable advertisement medium such as the backpack.

Another object of the present disclosure is to provide an advertising system and a method which enables to check whether an advertising is performed normally while performing the advertising through a movable advertisement medium.

Yet another object of the present disclosure is to provide an advertising system and a method which pay an advertising fee differentially according to an effectiveness of an advertising while performing the advertising through a movable advertisement medium.

According to an aspect of an exemplary embodiment, provided is an advertising system including: an advertiser device configured to order an advertising and pay an advertising expense for an ordered advertising; an advertisement module comprising an advertisement medium configured to output an advertising content and a mobile terminal of a user using the advertisement medium; and an advertising agency device configured to communicate with the advertiser device and the advertisement module, receive an advertising option and advertising expense data from the advertiser device, providing advertising data according to the advertising option to the advertisement medium through the mobile terminal so that the advertisement medium outputs the advertising content corresponding to the advertising data, determine an advertising validity which indicates whether the advertising content is output according to the advertising option, and pay an advertising fee to an account of the user when the advertising content is determined to be output according to the advertising option in a determination of the advertising validity.

According to an aspect of another exemplary embodiment, provided is an advertising agency device including: a communication unit configured to communicate with an advertiser device or a mobile terminal of a user who carries an advertisement medium; and a controller configured to receive an advertising option and advertising expense data from the advertiser device through the communication unit, provide advertising data according to the advertising option to the advertisement medium through the mobile terminal so that the advertisement medium outputs an advertising content corresponding to the advertising data, determine an advertising validity which indicates whether the advertising content is output according to the advertising option, and pay an advertising fee to an account of the user when the advertising content is determined to be output according to the advertising option in a determination of the advertising validity.

The advertising option may include at least one of: an advertisement style, an exposure area, an exposure time, an exposure priority, and a type of the advertisement medium.

The controller may determine the advertising validity by comparing positions, times, and speeds of the advertisement medium and the mobile terminal, respectively, that are determined based on GPS positioning information of the advertisement medium and the mobile terminal when the advertising content is output in the advertisement medium.

The controller may determine the advertising validity by at least one of: determining whether the advertisement medium moves in the exposure area during the exposure time based on GPS positioning information of the advertisement medium; receiving a photograph image of the advertisement medium in a current location from the advertisement medium and determining whether the advertisement medium is located in the exposure area during the exposure time; and receiving the photograph image of the advertisement medium in the current location from the advertisement medium and determining whether the advertisement medium moves in the exposure area during the exposure time.

The controller may pay an additional advertising fee to the account of the user according to a number of persons near the user acquired from the advertisement medium or the mobile terminal when the advertising content is output through the advertisement medium.

The controller may pay an additional advertising fee to the account of the user in case of receiving information that the advertisement medium outputting the advertising content is exposed in a mass medium.

The advertisement medium may be one selected from a group consisting of: a backpack, a bag, a suitcase, clothes, an automobile, a mobile robot, a bicycle, or a motorcycle comprising a display unit suitable for outputting the advertising content.

The controller may receive GPS positioning information from the advertisement medium or the mobile terminal, checks a current location or a current time based on the GPS positioning information, and provides the advertisement medium with the advertising data suitable for the current location or the current time.

According to an aspect of yet another exemplary embodiment, provided is an advertising method performed by an advertising agency device accessible by an advertiser device and a mobile terminal of a user who carries an advertisement medium. The method includes: receiving an advertising option and advertising expense data from the advertiser device; providing advertising data according to the advertising option to the advertisement medium through the mobile terminal so that the advertisement medium outputs an advertising content corresponding to the advertising data; determining an advertising validity which indicates whether the advertising content is output according to the advertising option; and paying an advertising fee to an account of the user when the advertising content is determined to be output according to the advertising option in a determination of the advertising validity.

The operation of determining the advertising validity may include at least one of: determining whether the advertisement medium moves in an exposure area designated by the advertising option during an exposure time designated by the advertising option on a basis of GPS positioning information of the advertisement medium; receiving a photograph image of the advertisement medium in a current location from the advertisement medium and determining whether the advertisement medium is located in the exposure area during the exposure time; and receiving the photograph image of the advertisement medium in the current location from the advertisement medium and determining whether the advertisement medium moves in the exposure area during the exposure time.

The operation of providing the advertising data to the advertisement medium may include: receiving GPS positioning information from the mobile terminal; and checking a current location or a current time based on the GPS positioning information and providing the mobile terminal with the advertising data suitable for the current location or the current time.

The present disclosure can suppress the problem of the fraudulent receipt of the advertising fee by determining an advertising validity which indicates whether the advertising content is output normally while performing the advertising through the movable advertisement medium. The advertising validity may be determined based on a location, time, or speed of the advertisement medium while the advertising content is output, so as to check whether the advertising content is output normally through the movable advertisement medium.

The advertising agent device according to the present disclosure enables to expose the advertising content based on the current location or the current time of the user to enhance the effectiveness of the advertising.

An additional advertising fee may be paid to the user by calculating the number of persons existing near the user based on nearby information acquired by a camera or a sensor installed in the advertisement medium and applying a weighting factor according to the number of persons.

Also, it is possible to uncover or monitor any unfair user who performs the advertising abnormally with an assistance of a fair user who performs the advertising normally by displaying a map indicating a location of the user along with locations of other users near the user on the mobile terminal of the user and facilitating each user to check positions of the other users. After checking the reporting, the advertising agency device may give a penalty to the unfair user while rewarding a compensation to a reporter.

### BRIEF DESCRIPTION OF THE DRAWINGS

In order that the disclosure may be well understood, there will now be described various forms thereof, given by way of example, reference being made to the accompanying drawings, in which:
FIG. 1 is a block diagram illustrating an advertising system using a movable advertisement medium according to an embodiment of the present disclosure;
FIG. 2 is a detailed block diagram of the movable advertisement medium shown in FIG. 1;
FIG. 3 illustrates an example of the movable advertisement medium shown in FIG. 1;
FIG. 4 is a detailed block diagram of a mobile terminal shown in FIG. 1;
FIG. 5 is a detailed block diagram of an advertising agency device shown in FIG. 1; and
FIG. 6 is a flowchart illustrating an advertising method in the advertising system using the movable advertisement medium according to an embodiment of the present disclosure.

The drawings described herein are for illustration purposes only and are not intended to limit the scope of the present disclosure in any way.

### DETAILED DESCRIPTION

In the following description and the accompanied drawings, detailed descriptions of well-known functions or configuration that may obscure the subject matter of the present disclosure will be omitted for simplicity.

The terms and words used in the following description and appended claims are not necessarily to be construed in an ordinary sense or a dictionary meaning, and may be appropriately defined herein to be used as terms for describing the present disclosure in the best way possible. Such terms and words should be construed as meaning and concept consistent with the technical idea of the present disclosure. The embodiments described in this specification and the configurations shown in the drawings are merely preferred embodiments of the present disclosure and are not intended to limit the technical idea of the present disclosure. Therefore, it should be understood that there may exist various equivalents and modifications which may substitute the exemplary embodiments at the time of filing of the present application.

Hereinbelow, exemplary embodiments of the present disclosure will be described in detail with reference to the accompanying drawings.

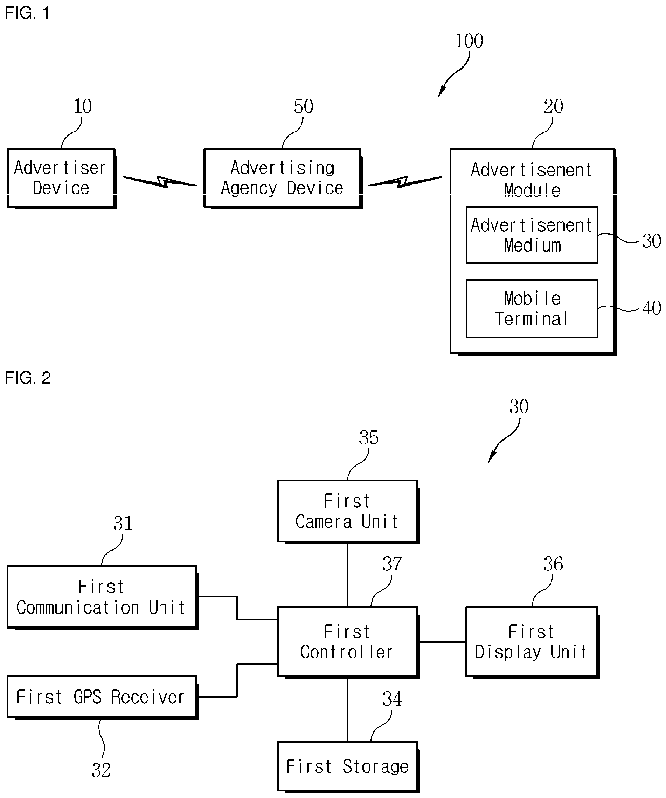

FIG. 1 is a block diagram illustrating an advertising system using a movable advertisement medium according to an embodiment of the present disclosure.

Referring to FIG. 1, an advertising system 100 according to an embodiment of the present disclosure exposes an advertisement through a movable advertisement medium 30 carried or worn by a user and pays an advertising fee corresponding to the advertisement. The advertising system 100 checks a validity of the advertising before paying the advertising fee to the user to suppress a fraudulent receipt of the advertising fee.

The advertising system 100 may include an advertiser device 10, an advertisement module 20, and an advertising agency device 50. The advertiser device 10 requests or orders the advertising agency device 50 to perform an advertising to and pays an advertising expense for the advertising. The advertisement module 20 may include an advertisement medium 30 carried or worn a user of the advertisement medium 30 and suitable for outputting an advertising content and a mobile terminal 40 carried by the user. The advertising agency device 50 communicates with the advertiser device 10 and the advertisement module 20 to receive an advertising option and advertising expense data from the advertiser device 10 and to transmit advertising data according to the advertising option to the mobile terminal 40. Also, the advertising agency device 50 determines the validity of the advertising which indicates whether the advertising is fulfilled according to the advertising option, i.e. whether the advertising content is output according to the advertising option, in the advertisement medium 30. If it is determined that the advertising content is output according to the advertising option in the advertisement medium 30, the advertising agency device 50 pays the advertising fee to the account of the user.

Here, the advertiser device 10 performs communications with the advertising agency device 50. The advertiser device 10 may request or order the advertising agency device 50 to perform the advertising. When requesting the advertising, the advertiser device 10 may choose the advertising option and pays the advertising expense according to the chosen advertising option.

The advertising option may include an advertisement style, an exposure area, an exposure time, an exposure priority, or a type of the advertisement medium 30. The advertisement style may indicate a time exclusive advertisement or a rolling advertisement, for example. The exposure priority refers to a turn in sequentially exposing a plurality of advertisements. The advertisement medium 30 refers to a movable advertisement medium that can be used by a user to expose the advertisement to nearby persons. The advertisement medium 30, which includes a display unit or a billboard suitable for outputting the advertising content to outside, may be a bag, a backpack, a suitcase, clothes, an automobile, a mobile robot, a bicycle, or a motorcycle, for example.

The advertiser device 10 may be a communication device used by the advertiser and may be as a server, a PC, a notebook, a tablet PC, or a smart phone, for example.

The advertisement module 20, which is a communication device that is carried or worn by the user to perform the advertising, may include the advertisement medium 30 and the mobile terminal 40. The advertisement medium 30 includes the display unit suitable for outputting the advertising content as described above. The mobile terminal 40 may be a communication device capable of performing a short-range communication with the advertisement module 20 and capable of performing a long distance communication with the advertising agency device 50. The mobile terminal 40 may be a smart phone, a tablet PC, or a notebook computer, for example. A short-range communication scheme employed in the mobile terminal 40 may include Bluetooth, Wi-Fi, or ZigBee. A mobile communication network may be utilized for the long distance communication by the mobile terminal 40.

The mobile terminal 40 delivers advertising data received from the advertising agency device 50 to the advertisement medium 30 so that the advertisement medium 30 outputs the advertising content corresponding to the advertising data. The mobile terminal 40 provides the advertising agency device 50 with GPS positioning information and a photograph image required for verifying the validity of the advertising in the advertisement medium 30.

The advertising agency device 50, which is a communication device used by an advertising agent, communicates with the advertiser device 10 and the mobile terminal 40. The advertising agency device 50 generally controls the advertising through the advertisement medium 30. The advertising agency device 50 accepts an advertising request from the advertiser device 10 and transmits the advertising data according to the advertising request to the advertisement module 20, so that the advertisement medium 30 in the advertisement module 20 outputs the advertising content corresponding to the advertising data. The advertising agency device 50 pays the advertising fee for the advertising to the user of the advertisement module 20.

Before paying the advertising fee to the user, the advertising agency device 50 checks the validity of the advertising which indicates whether the advertising content is normally output according to the advertising option. The advertising agency device 50 may pay the advertising fee to the user only when the advertising content is validly output through the advertisement medium 30 to suppress the payment of the advertising fee to the user who performed the advertising abnormally.

The advertising fee may be paid in a actual money, an online money, points, a voucher, and so on. The type of the user account does not matter so long as the account is capable of receiving the advertising fee. For example, the user account can be an actual bankbook account, an online account, a virtual account, a point account, an email address of the user, a mobile phone number of the user.

The advertising medium 30 will be described in detail with reference to FIGS. 1 and 2. FIG. 2 is a detailed block diagram of the movable advertisement medium 30 shown in FIG. 1.

Referring to 1 and 2, the advertisement medium 30 includes a first communication unit 31, a first GPS receiver 32, a first storage 34, a first camera unit 35, a first display unit 36, and a first controller 37.

The first communication unit 31 performs the short-range communication with the mobile terminal 40. The first communication unit 31 receives the advertising data from the mobile terminal 40 under the control of the first controller 37. The first communication unit 31 transmits a first GPS positioning information acquired by the first GPS receiver 32 to the mobile terminal 40 under the control of the first controller 37. The first communication unit 31 transmits a first photograph image acquired by the first camera unit 35 to the mobile terminal 40 under the control of the first controller 37.

The first GPS receiver 32 receives a first GPS signal from GPS satellites to acquire the first GPS positioning information. The first GPS receiver 32 transmits the first GPS positioning information to the mobile terminal 40 through the first communication unit 31.

The first storage 34 stores a program required for controlling the operation of the advertisement medium 30 and information generated during the execution of the program. The first storage 34 may store an advertising service application configured to output the advertising content according to the advertising data received from the mobile terminal 40. The first storage 34 may temporarily store the advertising data received from the mobile terminal 40. The first storage 34 may store the first GPS positioning information received from the first GPS receiver 32 while the advertising is performed. The first storage 34 may store the photograph image captured by the first camera unit 35.

The first camera unit 35 may capture a surrounding image under the control of the first controller 37. That is, while the advertising content is exposed through the first display unit 36, the first controller 37 may capture the surrounding image through the first camera unit 35. The first camera unit 35 may include an image sensor, a signal processing unit, and an image processing unit. The image sensor converts the photograph image signal into an analog signal. The signal processing unit converts the analog signal into a digital image signal. The image processing unit processes the digital image signal received from the signal processing unit to acquire digital image data. The image processing unit transmits the digital image data to the mobile terminal 40 through the first communication unit 31, transmits the digital image data to the first display unit 36, or stores the digital image data in the first storage 34. The first camera unit 35 may include a visible light camera or an infrared camera, for example.

The first display unit 36 may display information stored in the first storage 34 as well as various function menus executable in the advertisement medium 30. The first display unit 36 may output the advertising content. The first display unit 36 may include an liquid crystal display (LCD), a light emitting diode (LED) display, an active matrix organic light emitting diode (AMOLED) display, or a touch screen. The touch screen may perform both the functions of a display device and an input device.

The first controller 37 is a microprocessor that performs an overall control of the advertisement medium 30. The first controller 37 outputs an advertising image received from the mobile terminal 40 through the first display unit 36. For example, the first controller 37 may receive the advertising image in a streaming fashion to display in the first display unit 36. The first controller 37 transmits the first GPS positioning information acquired by the first GPS receiver 32 to the mobile terminal 40. The first controller 37 transmits the first photograph image captured by the first camera unit 35 to the mobile terminal 40.

In addition, the advertisement medium 30 may further include a first input unit. The first input unit may be used to select a display mode of the first display unit 36. The display mode may include an advertising mode and a normal mode. When the advertising mode is selected, the first display unit 36 outputs the advertising content only. In the normal mode, the first display section 36 may be used for a general display purpose.

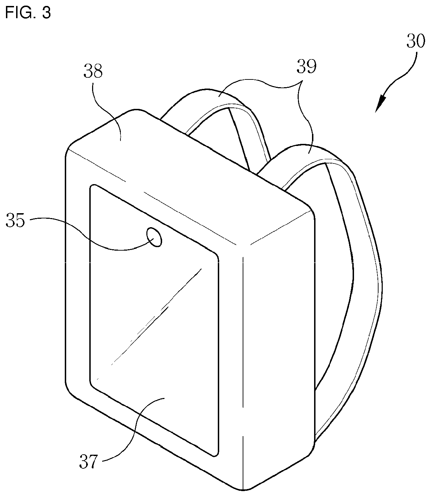

The advertisement medium 30 may be implemented as a backpack as shown in FIG. 3. FIG. 3 illustrates an example of the movable advertisement medium 30 shown in FIG. 1.

Referring to FIG. 3, the advertisement medium 30 may be embodied in a backpack. The advertising medium 30 includes a backpack body 38 and a harness 39 or shoulder strap that facilitates slinging of the backpack body 38 on the shoulder.

The advertisement medium 30 includes the first display unit 36 and the first camera unit 35 both of which are exposed on the front face of the backpack body 38. The advertising content is output through the first display unit 36 exposed on the front face of the backpack body 38, so that the advertising content is exposed to nearby persons as the user moves around in a state of slinging the advertisement medium 30.

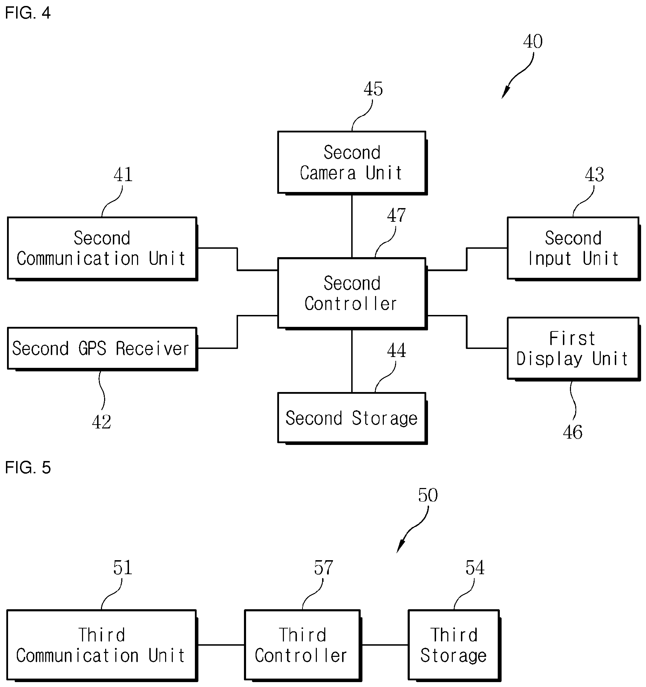

The mobile terminal 40 according to the present embodiment will be described in detail with reference to FIGS. 1 and 4. FIG. 4 is a detailed block diagram of the mobile terminal 40 shown in FIG. 1.

Referring to FIGS. 1 and 4, the mobile terminal 40 intermediates information exchanges between the advertising agency device 50 and the advertisement medium 30 for the advertisement and the payment of the advertising fee. The mobile terminal 40 includes a second communication unit 41, a second GPS receiver 42, a second input unit 43, a second storage 44, a second camera unit 45, a second display unit 46, and a second controller 47.

The second communication unit 41 performs the short-range communication with the advertisement medium 30 and performs the long distance communication with the advertising agency device 50. The second communication unit 41 receives the advertising data from the advertising agency device 50 under the control of the second controller 47 to provide the advertising data to the advertisement medium 30. The second communication unit 41 transmits the first GPS positioning information or a second GPS positioning information acquired by the second GPS receiver 42 to the advertising agency device 50. The second communication unit 41 can transmit a second photograph image acquired by the second camera unit 45 to the advertising agency device 50 under the control of the second controller 47.

The second input unit 43 provides key buttons for operating the mobile terminal 40 and generates a selection signal according to a key input to transmit the selection signal to the second controller 47. The user can request the advertising agency device 50 to transmit the advertising data through the second input unit 43. The user can instruct, through the second input unit 43, the delivery of the advertising data received by the mobile terminal 40 to the advertisement medium 30. The user can choose an advertisement desired by the user among a plurality of advertisements provided by the advertising agency device 50 or set a advertisement preference by manipulating the second input unit 43. The second input unit 43 may be a pointing device such as buttons, a keypad, and a touchpad, or a touch screen.

The second storage 44 stores a program required for controlling the operation of the mobile terminal 40 and information generated during the execution of the program. The second storage 44 may store an advertising service application configured to perform an advertising service using the movable advertisement medium 30 according to the present disclosure. Here, the advertising service application may be executed after a logging-in of the user to deliver the advertising data received from the advertising agency device 50 to the advertisement medium 30.

The second storage 44 may temporarily store the advertising data received from the advertising agency device 50. The second storage 44 may store the second GPS positioning information received from the second GPS receiver 42 while the advertising is performed. The second storage 44 may store a photograph image captured by the second camera unit 45.

The second camera unit 45 may capture a surrounding image under the control of the second controller 47. That is, while the advertising content is exposed through the advertisement medium 30, the second controller 47 may capture the surrounding image through the second camera unit 45. The second camera unit 45 may include an image sensor, a signal processing unit, and an image processing unit. The image sensor converts the photograph image signal into an analog signal. The signal processing unit converts the analog signal into a digital image signal. The image processing unit processes the digital image signal received from the signal processing unit to acquire digital image data. The image processing unit transmits the digital image data to the advertising agency device 50 through the second communication unit 41, outputs the digital image data through the second display unit 46, or stores the digital image data in the second storage 44.

The second display unit 46 may display information stored in the second storage 44 as well as various function menus executable in the advertisement medium 30. The second display unit 46 may include the LCD, the LED display, the AMOLED display, or the touch screen. The touch screen may perform both the functions of a display device and an input device.

The second display unit 46 may enable the user to choose an advertisement to be displayed and show summary information of the advertisement to be output through the advertisement medium 30. For example, the summary information of the advertisement may include requirements for a location of the exposure, a exposure time, and a movement speed along with alarming information.

The alarming information may be used to provide an alarm to the user when the advertising being performed deviates from the advertising option prescribed for the advertising. The alarming information can be displayed on the second display unit 46 by a plain text, a highlighted text, or a blinking. When the alarm is to be output according to the alarming information, the second controller 47 may notify the output of the alarm by a beep or a vibration.

The second controller 47 is a microprocessor that performs an overall control of the mobile terminal 40. The second controller 47 transfers the advertising data received from the advertising agency device 50 to the advertisement medium 30. The second controller 47 transmits the first GPS positioning information or the second GPS positioning information to the advertising agency device 50. The second controller 47 transmits the first or the second photograph image to the advertising agency device 50.

The second controller 47 may allow the user to choose a desired advertisement from a plurality of advertisements provided by the advertising agency device 50 or set a advertisement preference. That is, in case that the advertising agency device 50 provides the plurality of advertisements to the mobile terminal 40 based on the current location of the user, the second controller 47 may receive a selection signal for choosing one of the plurality of advertisements from the second input unit 43 to output a chosen advertisement through the second display unit 46. When the advertisement preference is set, the second controller 47 may receive an advertisement corresponding to the advertisement preference from the advertising agency device 50based on the current location of the user.

The second controller 47 can receive and display the location information of other users located near the user from the advertising agency device 50 during the advertisement. For example, the locations of other users may be displayed on a map together with the current location of the user.

The user can approach other user in the vicinity and identify the other user because the other user also carries the advertisement medium 30. When the user approaches the other user in the vicinity indicated on the map but cannot identify the other user, the user can report the unidentifiable user to the advertising agency device 50. For example, if the user chooses the other user in the vicinity indicated on the map, the second controller 47 displays a pop-up window related to the reporting of the unidentifiable user on the second display unit 46. The second controller 47 transmits the report information to the advertising agency device 50 when the user submits the reporting.

It is possible to uncover or monitor any unfair user who performs the advertising abnormally with an assistance of a fair user who performs the advertising normally by displaying a map indicating the location of the user along with locations of other users near the user on the mobile terminal 40 of the user and facilitating each user to check positions of the other users. After checking the reporting, the advertising agency device can give a penalty to the unfair user while rewarding a compensation to the reporter.

The advertising agency device 50 according to the present embodiment will be described in detail with reference to FIGS. 1 and 5. FIG. 5 is a detailed block diagram of the advertising agency device 50 shown in FIG. 1.

Referring to FIGS. 1 and 5, the advertising agency device 50 includes a third communication unit 51 and a third controller 57. The advertising agency device 50 may further include a third storage 54.

The third communication unit 51 communicates with the advertiser device 10 or the mobile terminal 40. The third communication unit 51 receives the advertisement request from the advertiser device 10 under the control of the third controller 57. The third communication unit 51 provides the mobile terminal 40 with the advertising data requested by the mobile terminal 40 under the control of the third controller 57. The third communication unit 51 receives information required for verifying the validity of the advertising from the mobile terminal 40.

At this time, the information required for verifying the validity of the advertising may include the first GPS positioning information, the second GPS positioning information, the first photograph image, or the second photograph image.

The third storage 54 stores a program required for controlling the operation of the advertising agency device 50 and information generated during the execution of the program. In particular, the third storage 54 stores an execution program suitable for performing the advertisement through the advertisement medium 30, determining the validity of the advertising being performed, and paying the advertising expense for the advertising. The third storage 54 may store advertising contract information concluded with advertisers, information of advertisement to be transmitted to the mobile terminal 40, and information used for determining the validity of the advertising, and the like.

Here, the advertisement contract information includes information on the advertising option and the advertising expense. The information used for determining the validity of the advertising may include the first GPS positioning information, the second GPS positioning information, the first photograph image, and the second photograph image.

The third controller 57 is a microprocessor that performs an overall control of the advertising agency device 50. The third controller 57 may control the advertisement execution using the advertisement medium 30. That is, the third controller 57 may receive the advertising option and the advertising expense data from the advertiser device 10 through the third communication unit 51. The third controller 57 transmits the advertising data according to the advertising option to the advertisement medium 30 via the mobile terminal 40, so that the advertisement medium 30 outputs the advertising content corresponding to the advertising data. The third controller 57 determines whether the advertisement is being performed normally according to the advertising option in the advertisement medium 30. The third controller 57 pays the advertising fee to the account of the user in case that advertisement is performed in the advertisement medium 30 according to the advertising option.

When providing the advertisement to the advertisement medium 30, The third controller 57 may provide the advertising data to the advertisement medium 30 based on the current location or the current time of the advertisement medium 30. That is, the third controller 57 may receive the first or the second GPS positioning information from the advertisement medium 30 or the mobile terminal 40, respectively, to check the current position or the current time of the user by using the first or the second GPS positioning information and transmit the advertising data corresponding to the current position or the current time to the advertisement medium 30. The third controller 57 may provide the advertising data randomly based on the current location or the current time of the user. Alternatively, the third controller 57 may provide the advertising data chosen by the user or selected according to the preset advertisement preference.

The third controller 57 may determine the validity of the advertising by checking the location, the time, or the speed of the advertisement medium 30 based on the first and the second GPS positioning information. In detail, the third controller 57 may acquire information of a first location, a first time, and a first speed of the advertisement medium 30 using the first GPS positioning information. Also, the third controller 57 may acquire information of a second position, a second time, and a second speed of the mobile terminal 40 using the second GPS positioning information.

The verification of the position may be carried out by determining whether the first position and the second position coincide with each other within a certain error range. The verification of the time may be carried out by determining whether the first time and the second time coincide within a certain error range. The verification of the speed may be carried out by determining whether the first speed and the second speed match within a certain error range.

In the case of the speed verification, if the user moves on foot while carrying the mobile terminal 40, it is further determined whether or not the first and second speeds exceed the normal person's walking speed even if the first speed matches the second speed.

The first and second photograph images may be used additionally for determining the validity of advertising. It is possible to check whether or not the user is located in the exposure area set by the advertising option by using the first and second photograph images. For example, the validity of the advertising can be determined by checking whether or not the first and second shot images include an image of a landmark that can be used for an identification of the exposure area set by the advertising option. Here, the landmark may be a certain building, a sculpture, a signboard of a train station, or the like.

For example, the third controller 57 may determine the validity of the advertising as follows.

The third controller 57 may receive the first and second GPS positioning information and determine whether the advertisement medium 30 is moving within the exposure area during the exposure time.

Also, the third controller 57 may receive the first or second photograph images at the current location where the advertisement is performed and analyze the first or second photograph images to determine whether the advertisement medium 30 is located within the exposure area during the exposure time.

Also, the third controller 57 may receive the first or second photograph images at the current location where the advertisement is performed and analyze the first or second photograph images to determine whether the advertisement medium 30 is located and moving within the exposure area during the exposure time.

On the other hand, if it is determined that the advertisement exposure is performed validly in the advertisement medium 30, the third controller 57 may pay an additional advertising fee. The advertising fee may be calculated by multiplying a basic advertising fee by a weighting factor, or by adding the additional advertising fee to the basic advertising fee. The basic advertising fee is paid when the advertisement exposure exposure is performed validly according to the advertising option in the advertisement medium 30. The weighting factor may exceed one. The additional advertising fee cannot be higher than the basic advertising fee.

For example, the third controller 57 may pay the additional advertising fee by reflecting a number of persons around the user of which information is acquired from the advertisement medium 30 or the mobile terminal 40 performing the advertisement. In other words, the information on the number of persons may be collected by a sensing unit installed in the advertisement medium 30 or the mobile terminal 40 and configured to recognize persons. The sensing unit may include a camera unit, an ultrasonic sensor, or an infrared sensor.

Here, a facial recognition algorithm for recognizing a human face from the information collected by the sensing unit may be used to acquire the information on the number of persons in the vicinity of the advertisement medium 30.

Also, the third controller 57 may further pay the additional advertising fee in case that the third controller 57 receives information that the advertisement medium 30 performing the advertisement is exposed in a mass medium. That is, when the third controller 57 receives and checks that the advertisement being exposed in the advertisement medium 30 is exposed to the mass medium such as a broadcast medium or a billboard, the third controller 57 may provide the additional advertising fee to the user.

The third controller 57 can maintain and manage the data ledger related to a deposit and a withdrawal of the advertising expense and the advertising fee through a block chain.

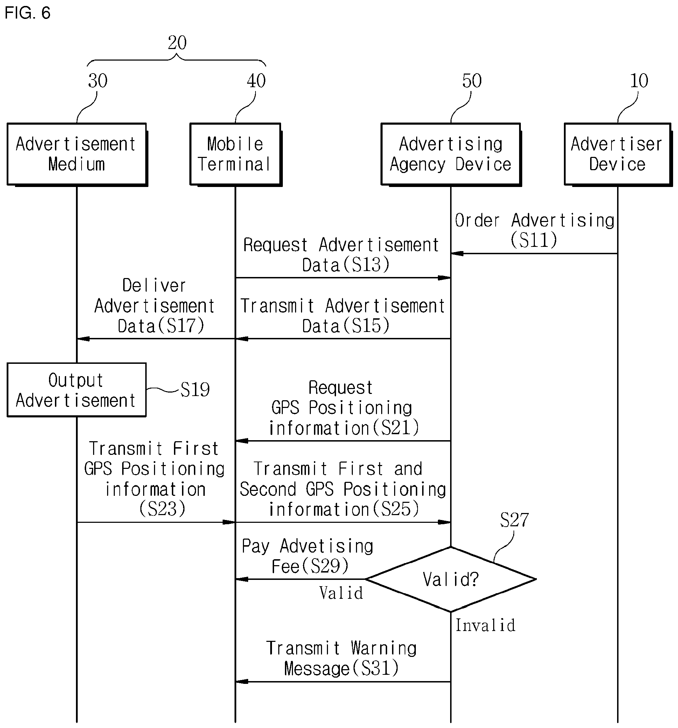

The advertising method in the advertising system 100 according to the present embodiment will be described in detail with reference to FIGS. 1 and 6. FIG. 6 is a flowchart illustrating an advertising method in the advertising system 100 using the movable advertisement medium 30 according to an embodiment of the present disclosure.

First, in step S11, the advertiser device 10 requests the advertising agency device 50 to perform an advertisement. At this time, the advertiser device 10 may choose the advertising option and pay the advertising expense for the chosen advertising option.

In step S13, the mobile terminal 40 requests the advertising data to the advertising agency device 50. At this time, the user may perform the logging-in process by using the advertising service application associated with the movable advertisement medium 30 through the mobile terminal 40. The user who logged in the system may request the advertising data to the advertising agency device 50 through the advertising service application. The advertising data requested by the user may be related to the advertisement chosen among various advertisements listed on the advertising service application or determined according to the user's preference set in advance.

In step S15, the advertising agency device 50 transmits the advertising data to the mobile terminal 40.

In step S17, the mobile terminal 40 delivers the received advertising data to the advertisement medium 30.

In step S19, the advertisement medium 30 outputs the advertising content corresponding to the received advertising data.

In step S21, the advertising agency device 50 requests the mobile terminal 40 for information required for verifying the validity of the advertising. In an embodiment where the GPS positioning information may be used for verifying the validity of the advertising, the advertising agency device 50 may request the GPS positioning information of the advertisement medium 30 and the mobile terminal 40.

In step S23, the advertisement medium 30 transmits the first GPS positioning information to the mobile terminal 40.

In step S25, the mobile terminal 40 transmits the first and second GPS positioning information to the advertising agency device 50.

In step S27, the advertising agency device 50 determines the validity of the advertising. At this time, the advertisement agency device 50 may determine the validity of the advertising by checking the position, the time or the speed based on the first and second GPS positioning information.

If the advertising is determined to be valid in the step S27, the advertising agency device 50 may notify the mobile terminal 40 of the payment of the advertising fee in step S29.

If the advertising is determined to be invalid in the step S27, the advertising agency device 50 may transmit the alarm message informing that the advertising is performed in an invalid manner to the mobile terminal 40 in step S31.

The description of the disclosure is merely exemplary in nature and, thus, variations that do not depart from the substance of the disclosure are intended to be within the scope of the disclosure. Such variations are not to be regarded as a departure from the spirit and scope of the disclosure. Also, it is to be understood that the terms used herein are used for the purpose of describing the present disclosure only and are not intended to limit the scope of the present disclosure.

## Claims

1. An advertising system, comprising:
an advertiser device configured to order an advertising and pay an advertising expense for an ordered advertising;
an advertisement module comprising an advertisement medium configured to output an advertising content and a mobile terminal of a user using the advertisement medium; and
an advertising agency device configured to communicate with the advertiser device and the advertisement module, receive an advertising option and advertising expense data from the advertiser device, providing advertising data according to the advertising option to the advertisement medium through the mobile terminal so that the advertisement medium outputs the advertising content corresponding to the advertising data, determine an advertising validity which indicates whether the advertising content is output according to the advertising option, and pay an advertising fee to an account of the user when the advertising content is determined to be output according to the advertising option in a determination of the advertising validity.

2. An advertising agency device, comprising:
a communication unit configured to communicate with an advertiser device or a mobile terminal of a user who carries an advertisement medium; and
a controller configured to receive an advertising option and advertising expense data from the advertiser device through the communication unit, provide advertising data according to the advertising option to the advertisement medium through the mobile terminal so that the advertisement medium outputs an advertising content corresponding to the advertising data, determine an advertising validity which indicates whether the advertising content is output according to the advertising option, and pay an advertising fee to an account of the user when the advertising content is determined to be output according to the advertising option in a determination of the advertising validity.

3. The advertising agency device of claim 2, wherein the advertising option includes at least one of: an advertisement style, an exposure area, an exposure time, an exposure priority, and a type of the advertisement medium.

4. The advertising agency device of claim 3, wherein the controller determines the advertising validity by comparing positions, times, and speeds of the advertisement medium and the mobile terminal, respectively, that are determined based on GPS positioning information of the advertisement medium and the mobile terminal when the advertising content is output in the advertisement medium.

5. The advertising agency device of claim 3, wherein the controller determines the advertising validity by at least one of:
determining whether the advertisement medium moves in the exposure area during the exposure time based on GPS positioning information of the advertisement medium;
receiving a photograph image of the advertisement medium in a current location from the advertisement medium and determining whether the advertisement medium is located in the exposure area during the exposure time; and
receiving the photograph image of the advertisement medium in the current location from the advertisement medium and determining whether the advertisement medium moves in the exposure area during the exposure time.

6. The advertising agency device of claim 2, wherein the controller pays an additional advertising fee to the account of the user according to a number of persons near the user acquired from the advertisement medium or the mobile terminal when the advertising content is output through the advertisement medium.

7. The advertising agency device of claim 2, wherein the controller pays an additional advertising fee to the account of the user in case of receiving information that the advertisement medium outputting the advertising content is exposed in a mass medium.

8. The advertising agency device of claim 2, wherein the advertisement medium is one selected from a group consisting of: a backpack, a bag, a suitcase, clothes, an automobile, a mobile robot, a bicycle, or a motorcycle comprising a display unit suitable for outputting the advertising content.

9. The advertising agency device of claim 2, wherein the controller receives GPS positioning information from the advertisement medium or the mobile terminal, checks a current location or a current time based on the GPS positioning information, and provides the advertisement medium with the advertising data suitable for the current location or the current time.

10. An advertising method performed by an advertising agency device accessible by an advertiser device and a mobile terminal of a user who carries an advertisement medium, comprising:
receiving an advertising option and advertising expense data from the advertiser device;
providing advertising data according to the advertising option to the advertisement medium through the mobile terminal so that the advertisement medium outputs an advertising content corresponding to the advertising data;
determining an advertising validity which indicates whether the advertising content is output according to the advertising option; and
paying an advertising fee to an account of the user when the advertising content is determined to be output according to the advertising option in a determination of the advertising validity.

11. The advertising method of claim 10, wherein the determining the advertising validity comprises at least one of:
determining whether the advertisement medium moves in an exposure area designated by the advertising option during an exposure time designated by the advertising option on a basis of GPS positioning information of the advertisement medium;
receiving a photograph image of the advertisement medium in a current location from the advertisement medium and determining whether the advertisement medium is located in the exposure area during the exposure time; and
receiving the photograph image of the advertisement medium in the current location from the advertisement medium and determining whether the advertisement medium moves in the exposure area during the exposure time.

12. The advertising method of claim 10, wherein the providing the advertising data to the advertisement medium comprises:
receiving GPS positioning information from the mobile terminal; and
checking a current location or a current time based on the GPS positioning information and providing the mobile terminal with the advertising data suitable for the current location or the current time.
